Europäisches Patentamt

European Patent Office

Office européen des brevets

(11) Publication number: **0 003 428**
**A1**

(12) **EUROPEAN PATENT APPLICATION**

(21) Application number: **79300121.5**

(22) Date of filing: **24.01.79**

(51) Int. Cl.²: **H 04 M 15/30**
**H 04 M 15/06**

(30) Priority: **24.01.78 GB 280678**
**21.07.78 GB 3071478**

(43) Date of publication of application:
**08.08.79 Bulletin 79/16**

(84) Designated contracting states:
**BE CH DE FR NL**

(71) Applicant: **PENDOLAN SYSTEMS LIMITED**
**Park House, Kingsley Park Terrace**
**Northampton(GB)**

(72) Inventor: **Monks, John**
**Park House Kinglsey Park Terrace**
**Northampton(GB)**

(74) Representative: **Wright, Hugh Ronald**
**Brookes & Martin, 52/54 High Holborn**
**London WC1V 6SE(GB)**

(54) **Telephone logging apparatus and process.**

(57) Apparatus and process for logging telephone calls on a single telephone line. The apparatus records on a cheap recording medium such as an audio cassette tape or a simple solid state memory a signal indicative of each telephone number dialled and signals indicative of the time of day and the duration of each telephone call dialled from the single telephone line. The information may be processed in a remote processing apparatus to produce the desired information.

Fig.1.

EP 0 003 428 A1

Croydon Printing Company Ltd.

- 1 -

TELEPHONE LOGGING APPARATUS AND PROCESS

The present invention relates to apparatus and process for logging telephone calls. By logging we mean recording for each telephone call (normally outward calls only) information such as one or more of the following: the number of the telephone to which the call is made and the period of the call.

Apparatus is known for logging telephone calls and in conventional arrangements which deal with a large number of telephone lines and extensions the apparatus scans each telephone line and extension in succession to determine whether or not the telephone line/extension is being used and if the scanning rate is sufficiently high then all the relevant information can be recorded and later reordered so as to provide the necessary information in respect of each telephone. Such apparatus is complex and costly and hence is usually restricted to use by industrial facilities or offices which have the computer facilities for handling such information.

The present invention provides telephone logging apparatus comprising means for connection to a single telephone line only, control means including a clock means, recorder means for recording information on a recording medium, said control means controlling said recorder means to record on said recording medium in a desired sequence a signal indicative of each telephone number dialled, and in conjunction with said clock, signals indicative of the time of day and the duration of each telephone call dialled from said single telephone line.

Preferably the control means and the clock means provide said signal indicative of the time of day only by causing said recorder means to record on said recording medium a signal when the time of day passes from one charge period to another.

A tone generator may be provided to pass to the recorder means audio signals suitable to be recorded on a magnetic audio tape cassette, and said recorder means includes means for mounting such a magnetic audio tape cassette. In this case the tone generator may produce audio signals consisting of combinations of different tones in accordance with a pre-arranged code. In this case when the apparatus is used on a telephone line in which multi frequency number coding is used, the control means may cause said recorder means to record the dial tones direct from the telephone line on to the magnetic audio tape cassette.

Alternatively, a binary electrical code generator is provided for producing signals suitable to be recorded on a recording medium in the form of a solid state memory, and means is provided for mounting such a solid state memory to receive said information.

Means may be provided to manually add further information regarding a particular call to said recording medium. Said means for manually adding further information may comprise a key pad or may alternatively comprise means for receiving an identifying means carrying a code relating to the holder of the identifying means, and means for extracting said code whereby the extracted code is recorded on the recording medium. In the latter case the identifying means may be in the form of a card carrying a code in the form of signals on a magnetic strip (that is, similar to a conventional credit card) and the means for extracting the code is then a card reader.

In these cases a verifying means may be included including means for manually inserting a code and means for comparing the manually inserted code with the code from the identifying means. The means for manually inserting the code many comprise a key board and there may also be provided means to reject or retain the identifying means if the code from the identifying means and the manually inserted code are not in a predetermined relationship with one another.

There may be provided a disconnection alarm whereby if part of the apparatus is disconnected from the telephone or from the power source then an alarm is operated. The disconnection alarm may include a plug and socket connection, one component of which incorporates a magnetic member or coil and the other of which incorporates a magnetic reed device whereby when the plug and socket are engaged with one another, the magnetic member or magnetic field produced by the coil maintains the relay in a first state and when they are disconnected from one another the relay is urged to a second state whereby to operate the alarm.

Means may be provided to record on said recording medium when part of the apparatus is disconnected from the telephone line or from the power supply.

The control means may include means whereby on receipt of a predetermined signal the information recorded on the recording medium is passed from the recording medium along the telephone line to a remote processor. Said predetermined signal may be derived from said clock or from the remote processor.

The apparatus may include print out means for printing out the basic unprocessed information recorded or being recorded on the recording medium.

The apparatus preferably records on said recording medium signals relating to the start of a particular charge period as indicated by said clock, a telephone number being dialled, the end of a telephone call and the duration of the telephone call.

The invention also provides a
telephone for public use connected to a single
telephone line including means for receiving a
card carrying a code, means for extracting a
code from said card, verifying means for verifying
the card, control means and means for recording
information regarding the code on the card, the
period of the day during which the telephone
call was made, the length of the telephone call,
and the number dialled.

The invention also provides a process
for providing telephone logging information with
respect to a single telephone line comprising
recording the information on a recording medium,
passing/the recording medium with the recorded
information to a separate processing apparatus,
and processing the recorded information to produce
the desired information.

The information may be recorded either
in the form of audio tones on an audio tape as a
recording medium or recorded as binary electrical signals on a solid state memory as a recording medium. The information on the recording medium may be passed to the processing apparatus by means of post or by a telephone line.

The information recorded for each telephone call may include the telephone number dialled and in addition signals indicative of the time of day and the duration of each telephone call dialled from the single telephone line. Further information may be added to the recording medium by means of a key pad or by means of an identifying means carrying a code relating to the holder of the identifying means.

Preferred embodiments of the apparatus of the invention will now be described by way of example only and with reference to the accompanying drawings in which:

Figure 1 is a logic diagram of a telephone logging apparatus according to a first embodiment of the invention,

Figure 2 is a diagrammatic view of a disconnection alarm assembly for incorporation in the apparatus of Figure 1,

Figure 3 is a diagrammatic view of apparatus for decoding and processing the information recorded by the apparatus of Figure 1,

Figure 4 is a view of a typical printed sheet produced by the apparatus of Figure 3.

Figure 5 is a logic diagram of a second embodiment of the invention which may be applied to a single telephone line,

Figure 6 is a diagram of the arrangement of Figure 5 particularly applicable to a public telephone,

Figure 7 is a perspective view of a telephone logging apparatus of the invention, and,

Figure 8 is a logic diagram corresponding to part of Figure 1 but showing a modified disconnection alarm.

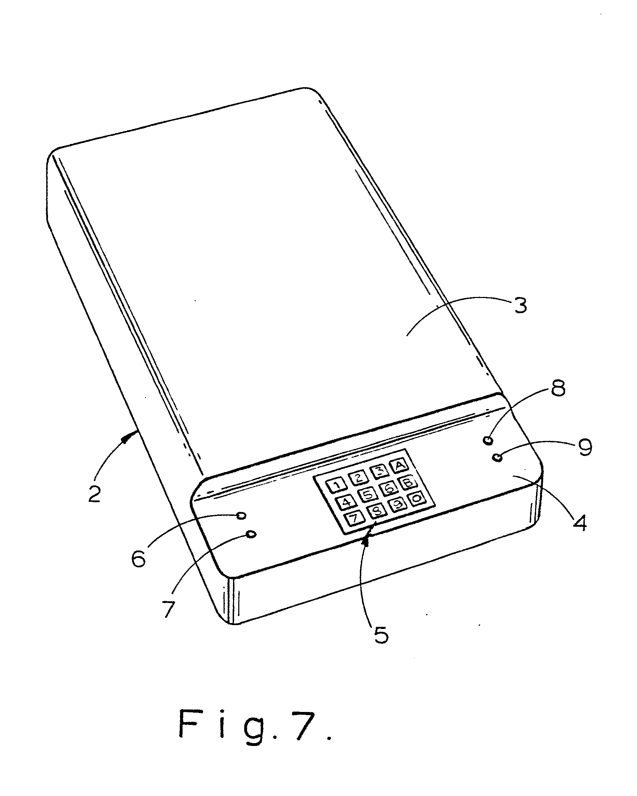

As can be seen from Figure 7, the telephone logging apparatus comprises a case 2 of metal, plastics or light material having a flat upper surface 3 on which a telephone may be stood. Projecting from the front of the flat upper surface 3 is a further generally horizontal surface 4 carrying a keyboard having twelve keys 5 carrying the numbers 1 to 9 and 0 and letters A and B. Four warning lamps 6, 7, 8 and 9/...............

are provided, lamp 6 indicating when the tape in
a   tape cassette is almost full, lamp 7 being a
         nection
discon/alarm, lamp 8 indicating when a telephone
call is being made and lamp 9 indicating when the
power supply is cut off.  To the rear of the case
2 (not shown) is provided means whereby the audio
cassette tape may be inserted.

The case shown in Figure 7 may
incorporate a telephone logging apparatus
including an audio cassette or in place
of the means for mounting the cassette then there
may alternatively be provided means for mounting
another form of memory device.

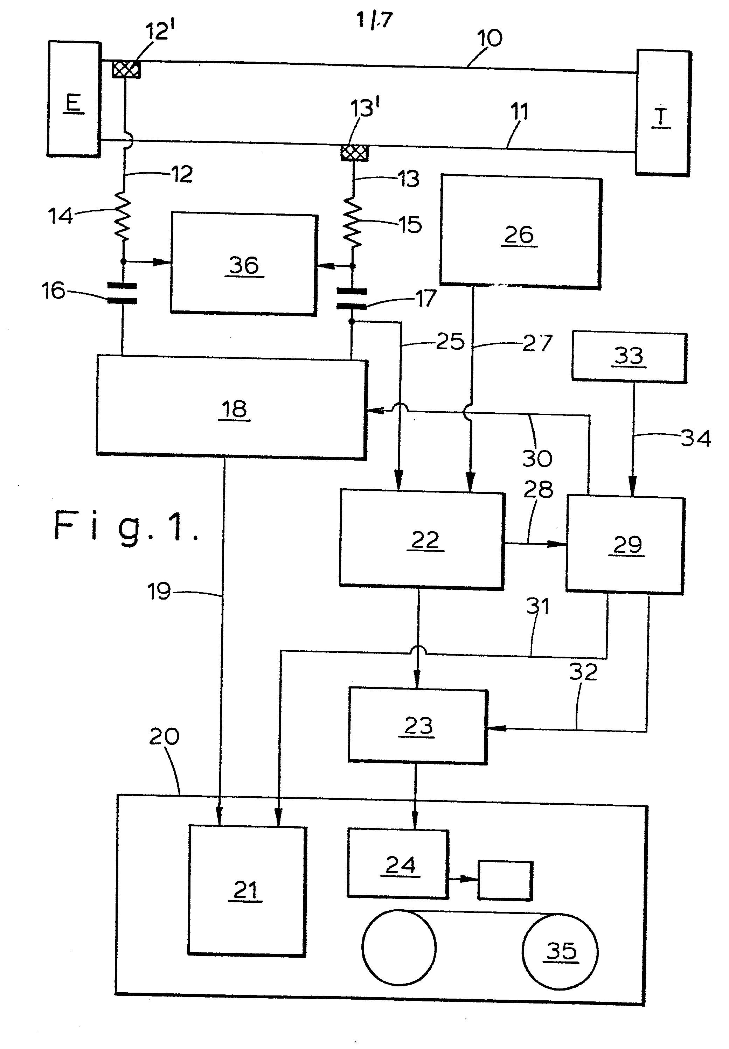

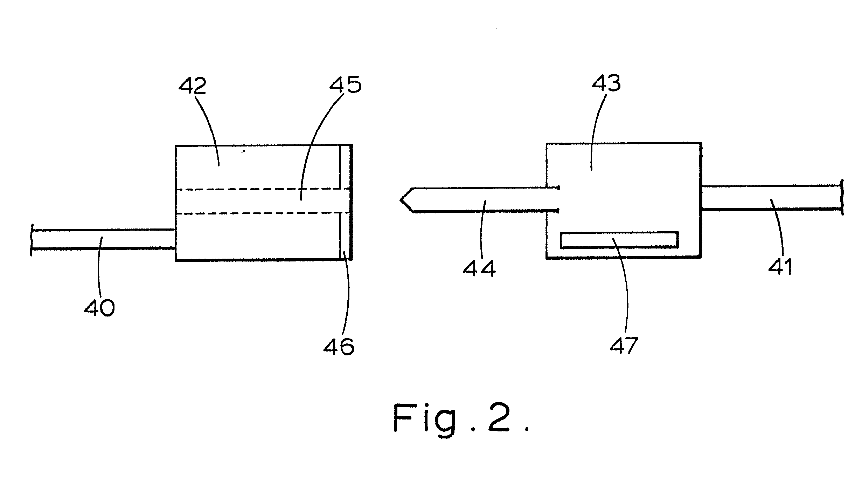

Referring now to the logic diagram of
Figure 1 which shows a  telephone logging apparatus
according to a first embodiment of the invention,
the two lines 10, 11 comprise a single telephone
line which is connected between the exchange E and
a telephone T which is to be logged.  Line inputs
12, 13 are taken from the lines 10, 11 to the telephone
logging apparatus via terminals 12', 13'.  Each line
input 12, 13 incorporates a respective resistor 14,
15 and capacitor 16, 17.  Reference 36 indicates a
disconnection alarm assembly which will be described
in more detail with reference to Figure 2.

The line inputs 12, 13 are connected to
a dial tone/on hook detector 18.  An output line 19
passes from the detector 18 to a recorder means in
the form of cassette tape unit 20 and in particular
to the drive unit 21 of that tape unit 20.

Line 13 is also connected to a dial pulse counter 22 and an output line from the dial pulse counter 22 passes to a tone generator 23. Output from the tone generator 23 is fed to a tape head 24 of the tape unit 20. A conventional audio tape cassette 35 is mounted in said tape unit 20.

There is also provided a client information key pad 26 (which is in fact the key 5 of Figure 1) which is connected by line 27 to the dial pulse counter 22. A further output line 28 passes from the dial pulse counter 22 to a clock 29, output lines 30, 31 and 32 from the clock 29 passing respectively to the detector 18, tape drive unit 21 and tone generator 23. A reset pad 33 is provided with an output line 34 feeding to the clock 29. The reset pad 33 comprises an MF generator.

Before describing in detail the various components of the apparatus of Figure 1 we shall describe the general operation of the apparatus. The detector 18 detects when the telephone on the telephone line is being used to dial another telephone. In practice it detects the dialling tone. It switches the tape drive unit 21 on via line 19 when dial pulses are detected.

The dial pulses are also received by the dial pulse counter 22 via lines 13 and 25 and are passed to the tone generator 23 which produces coded audio frequency tones which may, if desired, firstly be in accordance with the letter "C" to indicate the beginning of a call and then in accordance with the number being dialled and these are recorded sequentially (ie serially) on the tape 35. Sixteen combinations of audio frequency tones may be produced by the tone generator 23 and these may be produced in accordance with a standard multi-frequency number coding system. After completion of the dialling pulses the detector 18 switches off the tape drive 21.

After a selected delay which is necessary to allow for the setting up of the call, the clock 29 is instructed to begin timing. Alternatively, the clock can be instructed to begin timing immediately, a preselected period of time being cut from the total length of the time for each call during the processing of the tape to take into account the time required for dialling the call. The processing apparatus may provide a different period depending upon whether the call dialled is a local or long distance call; for example for a local call the processing equipment might delete 30 seconds from the call time, for a trunk call 35 seconds and for an international dialled call 65 seconds. As a third alternative, the information regarding the dialling of the call may be entered into a shift register and maintained there, for example, for 15 seconds delay before the clock is instructed to begin timing.　If the call is not connected during that period then the shift register will be cleared and no evidence of that call will be recorded.　If, however, the call is connected within that 15 second period then the information in the shift register is passed out in sequence to the apparatus and the clock is instructed to begin timing.

When the telephone hand set is replaced at the end of the call (ie the "on hook" condition) the detector 18 detects this, instructs the tape drive unit 21 to operate (optionally instructs the tone generator to record the letter "D" for/disconnect) and instructs the clock 29 to pass the information regarding the length of the time of the call to the tone generator 23 whence it is recorded on to the tape 35.　The tape drive 21 is then instructed to stop.

Incoming ringing signals are prevented from reaching the detector 18 by means of band stop filters.

Thus for each telephone call the following information is recorded sequentially in the form of tones of different frequency combinations on the tape 35;/(2) number dialled, (3)/duration of call, (4)"E" end of/call.
(1) letter C, "D" duration and "E" for

If the optional client information key pad 26 is incorporated then the telephone user may, before making the call, punch out a code corresponding to, for example, a telephone extension, or a particular client to whom the telephone call may be charged and under those circumstances this information is passed to the counter 22, to the tone generator 23 and to the tape head 24 for recording on the tape 35. Under these circumstances in addition to the information above listed recorded on the tape there will be information relating to the client or telephone extension.

Other information is also recorded on the tape. The clock is continually running and every hour the clock passes a signal along line 30 to the detector 18 to switch on the tape drive unit 21 and a signal "F" is passed by the clock 29 to the tone generator 23 to record this fact on the tape 35.

The tape drive unit 21 is then switched off. Furthermore, as is well known, the Post Office or Telephone Company charge different rates for telephone calls depending on the period of the day during which the telephone call is made and these changes of charging period can be deduced from the hourly "F" signal entered on to the tape by the clock 29.

One of the major advantages of using
audio tones to indicate the various facts to be recorded
is that the tones may be recorded onto a standard audio
cassette which is freely available and relatively cheap.
Hitherto, any recording which has taken place of
information in telephone logging systems has required
the use of expensive computer tape as it has generally
required the simultaneous recording of a number of
different channels across its width.

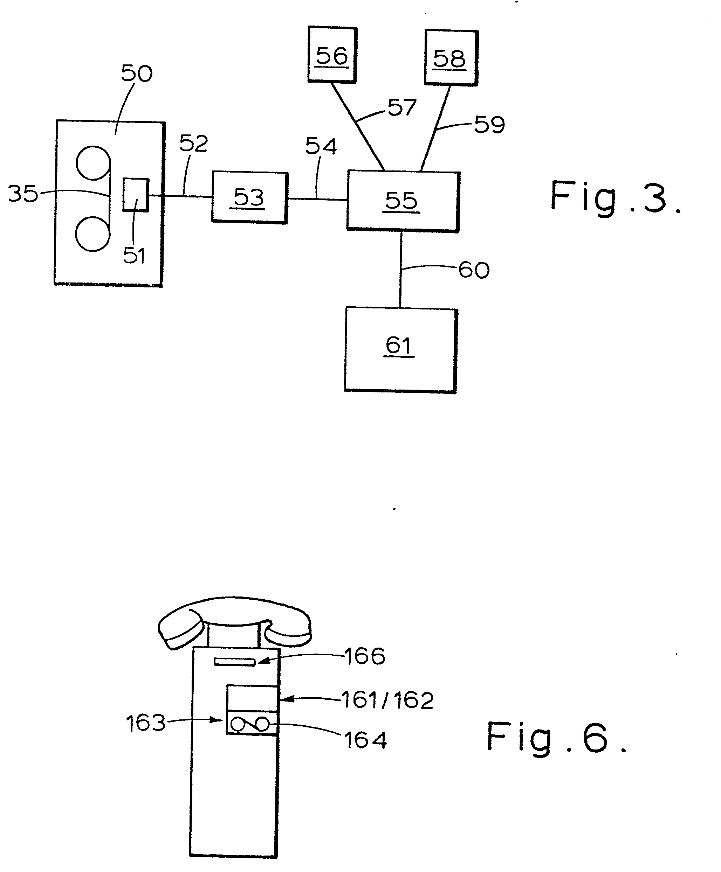

The information on the tape may be
processed by the apparatus of Figure 3. In Figure 3
the tape 35 is mounted in a read tape unit 50 having
a read head 51.

Before switching on the read tape unit
50 the key pad 56 is utilised to provide information to
the processor 55 regarding the date at which information
was first recorded onto the tape 35. As will be clear
from the description relating to Figure 1, the specific
date is not recorded on the tape but simply numbers
corresponding to each change of day and so it is necessary
to provide the processor with the information regarding
the beginning of the period recorded on the tape 35 so
that the relevant date and charge period can be indicated.

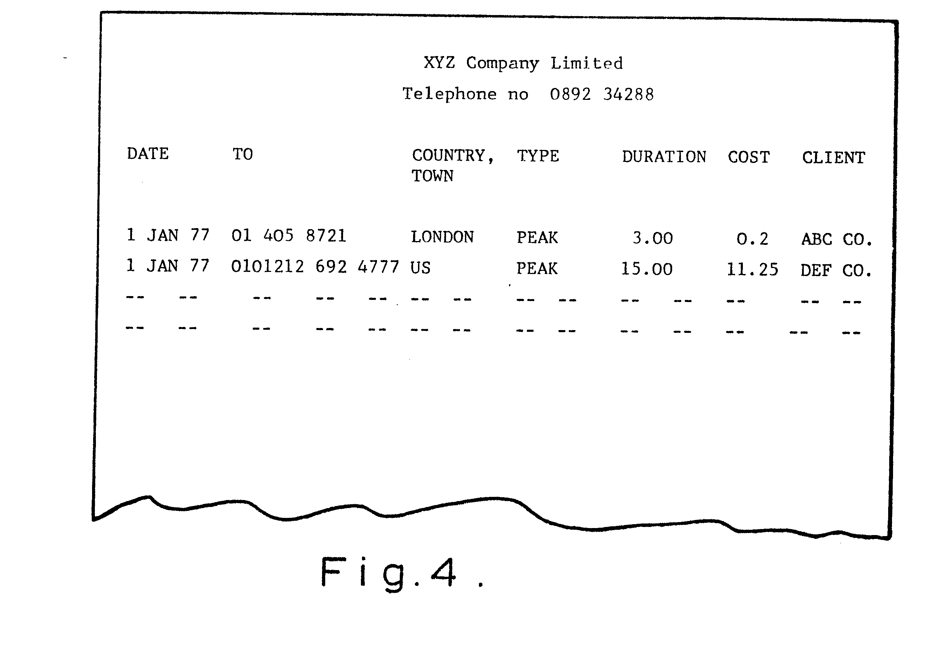

The audio signal from the read head 51 is
passed along line 52 to a tone reader 53. The output
of tone reader 53 is passed along line 54 to a
processor 55. An information key pad 56 is provided
having an output line 57 for passing information to the
processor 55 and a memory 58 is provided having an output line 59 for also passing information to the processor 55. The output of the processor 55 is passed along line 60 to a printer 61 whence the printed output 62 optionally of the type shown in Figure 4 is produced.

In use, the tape 35 is inserted in the read tape unit 50 and the read tape unit 50 is driven so as to pass the tape 35 past the read head 51. The tones are passed along line 52 to a tone reader 53 which converts the tone information in the form of combinations of frequency into binary coded inform- ation suitable for processing by the processor 55. In a simple case, each combination of tone may correspond to a specific binary coded number. In practice the output line 54 will have a plurality of channels, perhaps eight channels to provide sufficient binary information.

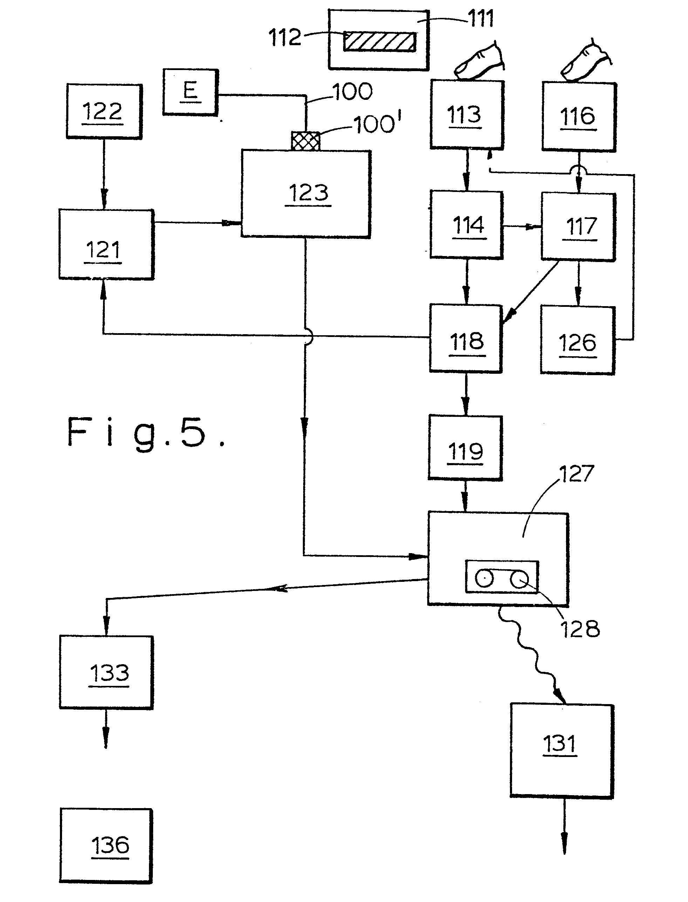

It will be understood that the memory 58 includes details of the different charging rates which may be applied at different times so that the processor 55 may process the information on the tape to provide not only a read out as to the number dialled in each telephone call but also the time and total charge which would be applicable given the charging rate in question. The processor therefore processes the incoming information and passes signals to the printer 61 along line 60 to produce a print out incorporating the following information as shown in Figure 5 with respect to each call. The telephone number dialled, the duration of the call, the charge, the date the call was made, and (if the client's key pad 26 was utilised) the client to whom the call is to be charged. As is clear from Figure 5 this information may be provided in the form of a printed sheet which may then be passed back to the telephone user together with a fresh cassette to replace the used cassette. For simplicity before passing the cassette back to the telephone user an indication of the telephone line to which it is attached may be inserted on the tape in the form of recorded information.

It is readily apparent that the apparatus described in Figure 3 may be owned and operated by the telephone user. However, the equipment indicated in Figure 3 is extremely expensive and it is unlikely that the user of a single telephone line would wish to buy such equipment. In practice it is envisaged that the system would operate as follows.

The single telephone user purchases or leases the equipment shown in Figure 1/which is attached to his telephone line. He then uses the equipment of Figure 1 to record on a cassette tape over a period of time and when this is full, or at the end of a predetermined period of time, the cassette is posted to the owner of the equipment shown in Figure 3 which may, for example, be a computer bureau. The computer bureau then processes the tape in the manner described produces a printed output 62 and returns by post to the telephone user the printed output 62 together with a fresh cassette. The computer bureau services a large number of separate telephone users.

A very considerable advantage of this system over the present system, which is applicable only to companies and organisations having a large number of telephone lines, is that for a relatively nominal sum a single telephone user may buy or rent the equipment shown in Figure 1 and may then pay to have the information processed by a central bureau. The expensive part of the equipment shown in Figure 3 is then used to service a large number of separate telephone users with consequent considerable economies.

The various parts of the apparatus of Figure 1 will now be described in greater detail.

Let us firstly consider the disconnection alarm and reset which is indicated in diagrammatic form in Figure 1 and in more detail in Figure 2. The lines 12 and 13 may be provided by a cable 40, 41, cable 40 being connected to the telephone line 10,11 and cable 41 to the detector 18. Cable 40 is connected to a socket 42 and cable 41 is connected to a plug 43. The plug 43 includes a jack pin 44 and the socket 52 includes a corresponding socket portion 45. The surface of the socket 42 surrounding the socket portion 45 incorporates a magnetic ring 46 and the plug 43 includes a reed insert 47. In use when the jack pin 44 is inserted in the socket portion 45 the magnetic ring 46 acts on the reed insert switch 47 to maintain it in a predetermined open or closed position. The reed insert 47 is connected by a wire to a disconnection alarm and when the plug 43 is removed from the socket 42 or power fails then the reed switch 47 changes to its other state to cause the alarm to operate.

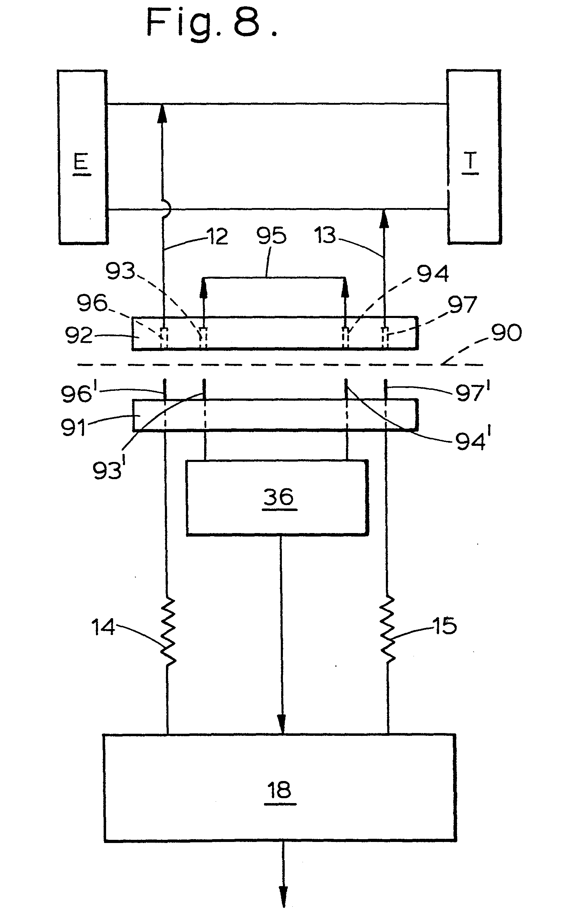

In the alternative arrangement shown in Figure 8, the lines 12, 13 are connected at point 90 to a four terminal plug 91 and socket 92, the lines 12,13 being connected respectively to terminals 96 and 97 of the socket 92. The terminals 93,94 of the socket 92 are connected together by a line 95. The terminals 96',97' of plug 91 which correspond with terminals 96,97 are connected to detector 18 and the terminals 93',94' are connected to disconnection alarm assembly 36. By applying voltage or passing a current through terminal 93', 93, line 95 and terminals 94, 94' disconnection of the plug 91 and socket 92 can be readily detected.

A similar arrangement may be used in the plug and socket connecting the apparatus to the main power supply whereby disconnection from the power supply may be indicated. This may be an audible alarm or may illuminate the lamp 7 of Figure 7. However, in this case, in place of the magnetic ring 46, there may be provided a coil which produces a magnetic field and which is connected across the mains so that not only disconnection of the plug and socket will be indicated by an alarm, but also failure of the power supply to the socket will be indicated.

The detector 18 has a number of functions as is already clear. It is arranged to sense the presence of dial tone on the telephone line and to operate the tape drive unit at this time so that the tape unit 20 can be operated and the dial pulse and other information can be recorded. It then switches off the tape drive unit 21 until the completion of the call and when it senses the completion of the call it instructs the clock 29 to record via the tone generator 23 the length of the time of the call.

The arrangement of Figure 1 is for use where multi-frequency dialling is not available. However, when multi frequency dialling is available, it is possible for the detector 18 to connect the dial pulses direct to the tape head 24 since these will be in the form of frequency tones which can be recorded directly on to the tape 35. The frequencies of these tones are given later when describing the tone/..........

generator in more detail. The detector can largely be provided by the M-907 receiver assembly which is manufactured by Tel-Tone Corporation of the United States of America. This apparatus also incorporates the dial pulse counter except that a relay or solid state switching system is required to produce an output suitable for the tone generator 23.

The dial pulse counter 22 can comprise part of the M-907 dial receiver assembly as indicated in the previous paragraph. Its function is to count the dialling pulses as they are received from the line and pass these to the tone generator 23. In practice, it produces output signals on a series of output lines which are then passed to separate relays to operate the tone generator.

The tone generator 23 is a known apparatus and is arranged to generate sixteen marking tones. In practice these can be made up of a combination of frequencies. The first eleven of the sixteen standard GPO tones are used as follows:

| 1 | 697 Hz + 1209 Hz |
| 2 | 697 Hz + 1336 Hz |
| 3 | 697 Hz + 1477 Hz |
| 4 | 770 Hz + 1209 Hz |
| 5 | 770 Hz + 1336 Hz |
| 6 | 770 Hz + 1477 Hz |
| 7 | 852 Hz + 1209 Hz |
| 8 | 852 Hz + 1336 Hz |
| 9 | 852 Hz + 1477 Hz |
| 10 | 941 Hz + 1336 Hz |

- 20 -

| 11 * | 941 Hz + 1209 Hz |
| 12 | 941 Hz + 1477 Hz |
| 12 A | 697 Hz + 1633 Hz |
| 14 B | 770 Hz + 1633 Hz |
| 15 C | 852 Hz + 1633 Hz |
| 16 D | 941 Hz + 1633 Hz |

0003428

Thus if in dialling the number on the telephone line the digits 372 are dialled there will be recorded along the audio tape the following audio tones 697 Hz + 1477 Hz simultaneously followed by a short space; followed by 697 Hz + 1336 Hz.

As indicated above this coding is in accordance with the standard telephone multi frequency dialling codes and if a multi frequency dialling telephone is attached to the telephone line then the dialling code can be fed direct to the tape head without the intermediary of the tone generator since it will already be using the same frequency dialling code. The digits 1 to 10 will correspond with digits to be dialled and the other numbers 11 to 16 may be utilised for other information such as the client's code number which is punched out on the client's information pad 26, the time code for the length of the call produced by the clock 29 and so on.

Instead of using 16 combinations of tones we may use two tones only, 1000 Hz and 2000 Hz. The signals can be in binary form, the "0" being indicated by a 1000 Hz pulse and the "I" being indicated by a 2000 Hz pulse.

The tape unit 20 is a more or less conventional cassette tape recorder. The tape drive unit 21 is adapted to receive signals from the detector 18 and from the clock 29 along lines 19 and 31 and to pass these on as start stop controls to the tape drive. The tape cassettes used are conventional audio C-120, C.90, C.60 or C.45 cassetts.

The client information key pad 26 produces an output acceptable to the dial pulse counter 22 so as to produce the relevant tones in the tone generator 23.

It may be instructive to compare the present apparatus with conventional telephone logging devices. Conventional systems comprise multi line loggers and it is conventional for them to be processed by the telephone user. The effect of this, of course, is that their use is restricted to large companies or organisations with a large number of telephone lines and with the computer facilities available to process the information. In the case of the present application the apparatus is applicable to a single telephone line only and the apparatus for logging the information on to the audio tape is of a relevantly simple and cheap nature and may therefore be purchased by a large number of people and organisations without extensive computer facilities. The processing of the information may be carried out by a bureau having the necessary computer apparatus and the bureau may act for a number of different telephone users.

In the present apparatus, by the use of tone signals, conventional audio cassettes may be used and as has already been described the information is recorded in sequential form along the tape. In the previous arrangements computer data tape is required which is very expensive and much information is recorded across the width of the tape, the tape requiring as many as eight heads to read eight channels across the tape. The information is recorded on the computer tape in the form of conventional binary coding, and hence the requirement for eight heads.

In the present apparatus a lot of more or less redundant information required by the conventional system is not recorded on the tape, for example, the telephone extension to which the call is connected (this is not necessary since only one telephone line is used). Conventionally, the month and the day is recorded for each call. In the present apparatus days need only be recorded as they change and these may be recorded in a sequential number. Thus one may number the days 1, 2, 3 etc and providing one knows the day on which the cassette tape was first installed (which may be indicated on the tape by the MF generator 33) then one knows the date on which the call was made. The time of day need not be entered for each call as it is on conventional apparatus, although we can indicate, if required, the time to within 1 hour.

The number dialled is of course recorded as with the conventional apparatus and its duration as a set figure is also recorded. However, in addition to the information which is normally recorded, the present apparatus may also record information regarding the client to whom, for example, the call is to be charged and this may be entered by means of the key pad described. The present invention therefore provides a very great advance over conventional systems in respect of its use for small businesses and individuals.

Furthermore, although the apparatus has been described with respect to a single telephone line, it could be used with a single telephone line having a plurality of extensions. Under these circumstances, each extension should enter its extension number by means of the key pad 26. Alternatively, a code relevant to a particular person using the telephone may be recorded as follows. Each person entitled to use the telephone is issued with an audio signal generator and when desiring to use the telephone this is switched on before dialling commences. The audio tone would be picked up by the telephone mouthpiece and the audio tone recorded. This information would then appear on the tape and enable the information regarding the person making the telephone call to be processed. Each person would of course have an audio generator producing a different tone. An advantage of this arrangement is that it would then not matter which telephone extension was being used by the particular person since the only information of relevance is the person making the call rather than the extension. Furthermore, any person making a telephone call not authorised and not issued with an audio generator could either be prevented by inserting in the apparatus some kind of means for cutting off the telephone line when a relevant audio signal has not been produced, or a suitable alarm could be given.

In Figure 5 which relates to a second embodiment of the invention particularly applicable to a public telephone (ie payphone), reference numeral 23 indicates the telephone T and at least the dial tone/on hook detector 18, dial pulse counter 22, tone generator 23, clock 29, and reset 33. The telephone T is connected to the exchange E by a single telephone line 100 through terminal 100'. There is illustrated diagrammatically an identifying means in the form of a plastic card 111 carrying thereon a strip of magnetic tape 112. Such a card is generally well known but other forms of identifying means such as a paper card carrying holes punched therethrough or marks embossed thereon or a key may alternatively be provided. However plastic cards have the advantage of being easy to carry and to manufacture.

As is also well known, the magnetic strip 112 may carry magnetic signals in the form of a code which is unique to that particular card and hence to the owner of the card although a number of identical cards with identical magnetic codes may be produced for, for example, employees of a company.

The apparatus of Figure 5 includes a card receiver 113 into which the card 111 may be inserted. The card receiver is connected to and may form part of a reading device in the form of a code extractor 114 the code extractor being adapted to read the code on the magnetic strip 112.

In addition there is provided a verifying code inserter 116 which may be in the form of a push button keyboard. This may provide signals which correspond to the code extracted from the card 111 and the signals from the code extractor 114 and verifying code inserter 116 may be compared in a comparator 117 and if identical (or related in some predetermined manner) thereby verifying that the person owning the card 111 and the person entering the verifying code into the inserter 116 are one and the same person, the comparator 117 passes a signal to the inhibitor 118 to thereby allow the code extracted by the extractor 114 to be passed to a code processor 119. The inhibitor 118 will also pass a signal to a further inhibitor 121 which also receives input signals from a telephone switch 122. When the inhibitor receives signals from both the telephone switch 122 and inhibitor 118 it passes a signal to the telephone 123 to cause it to be connected to the telephone line.

If, however, the signals received by the comparator 117 from the verifying code inserter 116 and code extractor 114 do not correspond then no signal is passed to the inhibitor 118 whereby the code is not passed from the code extractor 114 to the code processor 119 nor is inhibitor 121 deactivated to allow the telephone to be used. Furthermore, a signal is passed to a card retainer 126 which acts on the card receiver 113 to prevent removal of the card 111. In practice, as is well known, more than one attempt at entering a verifying code on the inserter 116 may be allowed.

The code received by the code processor 119 is passed to a recorder 127 corresponding to the recorder 120 of Figure 1 via the tone generator 23 which produces audio tones in accordance with the code detected and these may be simply recorded on the audio cassette 128 in the same manner as the previous embodiment.

Thus the audio tape cassette 128 will have recorded thereon, in a sequence a signal related to the code on the card 111, followed by the telephone number dialled, the duration of the call and the charge period.

As before, at regular intervals, either the tape cassette 128 may be removed from the recorder 127 and passed to a processor, or the information on the tape cassette 128 is removed and passed to a processor. In the first instance where the tape cassette 128 is in the form of an audio cassette, the cassette may simply be removed once a day or once a week and posted or otherwise sent to a remote processor 131 which may of course process similar tapes from a large number of similar telephones. In the alternative arrangement, the recorder 127 may include apparatus whereby the

remote processor 131 may call up the recorder 127 at regular intervals (for example over a telephone line at night) and cause the recorder 127 to operate to pass the information recorded on the recording medium 128 over the line to the remote processor 131. The remote processor 131 may then process the tape or recording medium or signals received therefrom and produce, for example, a bill for each user of the telephone.

In addition if desired, the raw unprocessed information may be passed from the recorder 127 to a printer 133 which may print a simple form 136 with only the raw information thereon, such information acting as a receipt. Such a receipt may simply carry the telephone number dialled and the period of time of the call, for example, without the actual cost of the call.

A modification of the telephone described with reference to Figure 5 is illustrated in Figure 6. In this Figure there is shown a generally conventional call box telephone. In this particular arrangement there is no coin box operating mechanism although this can be retained if necessary. The telephone apparatus includes, in addition to the telephone, a card receiver 161, a code extractor 162 and a code recorder 163 including an audio tape cassette 164. In use, the card is inserted in the card receiver 161 and the apparatus arranged such that the number of the card is displayed on a display 166. The insertion of the card debarrs the telephone so as to allow it to be used. The code extractor 62 reads the code on the card and this is recorded on the audio cassette 164 by the code recorder 163. Other information relating to the telephone number called, the duration of the call and an indication of the time of day is recorded on the audio cassette as described earlier. For convenience the code extractor 162 will produce an audio tone code which may be directly recorded on the cassette. 164.

As a refinement, when the telephone number has been dialled, the number dialled is also displayed on the display unit 166.

As has already been described, the audio cassette 164 may be removed at regular intervals, for example when the coin box is emptied if the coin box is attached and may be taken back to a central point to be processed by a processor 131. Alternatively, however, with suitable modification to the apparatus a central processor 131 at the telephone exchange may interrogate the telephone at regular intervals, for example, at night and extract the information from the audio cassette 164.

In the arrangement shown in Figure 6 there may be provided verifying apparatus as described with reference to Figure 5.

The information recorded by the various embodiments described may comprise audio tones or other signals providing the following type of information.

C 0 1 2 4 6 5 2 1 6 4 D 0 0 6 5 E

In this instance the letter C indicates the start of a call, the numbers 0 1 2 4 6 5 2 1 6 4 indicate the telephone number dialled, the letter D indicates the start of the duration of the telephone call, the numbers 0065 indicate in seconds the duration of the telephone call and the letter E indicates the end of the telephone call.

Another example might be as follows:

C 0 1 2 4 6 5 2 1 6 4 D 0 0 6 5 F C 0 1 2 4 6 5 2 1 6 4 D 0 0 2 4 E

In this case the code is as before except that it will be noted after the number 0065 the letter F appears. This indicates a change from one charge period to another. The fact that the same telephone number is repeated after that change of charge period indicates that the call started in one charge period and continued in a second hour and possibly a second -charge period, it being 65 seconds in the first hour and 24 seconds in the second hour.

A third example is as follows:

C 0 0 0 D 0 0 6 5 E

In this way the fact that the apparatus has been disconnected is indicated between the C and the D. The duration of the disconnection is 0065 seconds as indicated between the letters D and E.

In place of the audio tape cassette storage one may use solid state memory storage of the information. Figure 1 may be used to illustrate this arrangement also. Various solid state memories 35 might be used such as UVEPROM or magnetic bubble memories. These would operate in very much the same sort of way as audio tape except that in place of the tone generator there is provided a binary coded electrical signal generator 23 whereby the signals applied to the memory would be in binary form rather than in audio tone form. Such a memory storage is rapidly becoming very cheap and may well become as cheap or cheaper than the audio cassette type memory. In place of the cassette recorder 20 there would be provided means 20 for mounting the solid state memory and means 24 for passing the binary signals to the memory.

Particularly with solid state memories it is possible that the complete apparatus may be produced simply by means of modern solid state techniques such as microprocessors, in which case it may be simpler, rather than sending back a cassette tape for processing, to disconnect the complete apparatus and to send this back and to receive in exchange a new apparatus.

In a further modification the key pad
may be arranged to become alive to the acceptance
of information for a period of 30 seconds only after
the end of the call.  This is to prevent false
information being recorded on the tape and memory at
any other time.

The tapes or solid state memories may
also be processed on a simple home-type computer
to provide a written record or a display on a cathode
ray tube.

- 1 -

## Claims

1. Telephone logging apparatus comprising means for connection to a single telephone line only, control means including a clock means, recorder means for recording information on a recording medium, said control means controlling said recorder means to record on said recording medium in a desired sequence a signal indicative of each telephone number dialled, and in conjunction with said clock, signals indicative of the time of day and the duration of each telephone call dialled from said single telephone line.

2. Apparatus as claimed in claim 1 in which a tone generator is provided to pass to the recorder means audio signals suitable to be recorded on a magnetic audio tape cassette, and said recorder means includes means for mounting such a magnetic audio tape cassette.

3. Apparatus as claimed in claim 2 in which the tone generator produces audio signals consisting of combinations of different tones in accordance with a pre-arranged code.

4. Apparatus as claimed in claim 1 in which a binary electrical code generator is provided for producing signals suitable to be recorded on a recording medium in the form of a solid state memory, and means is provided for mounting such a solid state memory to receive said information.

5. Apparatus as claimed in any of claims 1 to 4 including means to manually add further information regarding a particular call to said recording medium.

6. Apparatus as claimed in claim 5 in which said means for manually adding further information comprises a key pad.

7. Apparatus as claimed in claim 5 in which said means for manually adding further information includes means for receiving an identifying means carrying a code relating to the holder of the identifying means and there is provided means for extracting said code whereby the extracted code is recorded on the recording medium.

8. Apparatus as claimed in claim 7 in which the identifying means is in the form of a card carrying a code in the form of signals on a magnetic strip.

9. Apparatus as claimed in any of claims 1 to 8 in which there is provided a disconnection alarm whereby if part of the apparatus is disconnected from the telephone or from a power source then an alarm is operated.

10. A process for providing telephone logging information with respect to a single telephone line comprising recording the information on a recording medium, passing the recorded information or the recording medium with the recorded information to a separate processing apparatus and processing the recorded information to produce the desired information.

11. A process as claimed in claim 10 in which the information is recorded in the form of audio tones on an audio tape as a recording medium.

12. A process as claimed in claim 10 in which the information is recorded as binary electrical signals on a solid state memory as a recording medium.

13. A process as claimed in any of claims 10 to 12 in which the recording medium is passed to the processing apparatus by means of post.

14. A process as claimed in any of claims 10 to 12 in which the information on the recording medium is passed to the separate processing apparatus along a telephone line.

Fig.1.

Fig. 2.

41 43 47 44 45 46 42 40

Fig.3.

Fig.6.

XYZ Company Limited

Telephone no   0892 34288

| DATE | TO | COUNTRY, TOWN | TYPE | DURATION | COST | CLIENT |
|------|-----|------|------|----------|------|--------|
| 1 JAN 77 | 01 405 8721 | LONDON | PEAK | 3.00 | 0.2 | ABC CO. |
| 1 JAN 77 | 0101212 692 4777 | US | PEAK | 15.00 | 11.25 | DEF CO. |
| -- | -- | -- -- | -- -- | -- -- | -- -- | -- -- |
| -- | -- | -- -- | -- -- | -- -- | -- -- | -- -- |

# Fig.4.

Fig.5.

Fig.7.

# Fig. 8.

# EUROPEAN SEARCH REPORT

Application number

EP 79 30 0121

## DOCUMENTS CONSIDERED TO BE RELEVANT

European Patent Office

| Category | Citation of document with indication, where appropriate, of relevant passages | Relevant to claim |
|---|---|---|
| A | FR - A - 2 051 853 (CHARRIOT)  <br> * Page 2, line 35 to page 3, line 19; figure 1 * | 1,2,10, 11,14 |
| X | FR - A - 1 431 752 (TOMATIS)  <br> * Page 1, column 1, line 26 to page 2, column 2, line 17; figure * | 1,2 |
| | FR - A - 1 243 922 (COMPAGNIE GENERALE DE CONSTRUCTIONS TELEPHONIQUES)  <br> * Page 3, column 2, line 47 to page 6, column 2, line 19; figures * | 1,2,10, 11,14 |
| | GB - A - 1 469 639 (TELSTOP)  <br> * Page 3, lines 9 to 56; figure 1 * | 1,2,10, 11 |
| | US - A - 3 959 607 (VARGO)  <br> * Column 4, lines 11 to 50; figure 5 * | 7,8 |
| | US - A - 3 844 512 (FAHLENBERG)  <br> * Column 2, line 12 to column 4, line 7; figure 1 * | 1,2 |

### CLASSIFICATION OF THE APPLICATION (Int. Cl.²)

H 04 M 15/30
15/00

### TECHNICAL FIELDS SEARCHED (Int.Cl.²)

H 04 M 15/30
15/06
15/22
15/18
15/04
15/12
15/10
15/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 11-04-1979 | KEPPENS |

EPO Form 1503.1  06.78